# EUROPEAN PATENT SPECIFICATION

(11) **EP 0 917 767 B1**
(45) Date of publication and mention of the grant of the patent: **02.11.2005**
(21) Application number: 98913948.0
(22) Date of filing: 31.03.1998
(51) Int. Cl.: H04B 1/20

(54) **A METHOD FOR REMOTELY CONTROLLING A PLURALITY OF APPARATUS USING A SINGLE REMOTE CONTROL DEVICE**
VERFAHREN ZUR FERNBEDIENUNG VON MEHREREN GERÄTEN MIT EINER EINZIGEN FERNBEDIENUNG
PROCEDE PERMETTANT D'UTILISER UN SEUL DISPOSITIF DE TELECOMMANDE POUR COMMANDER A DISTANCE PLUSIEURS APPAREILS

(30) Priority: 01.04.1997 GB 9706620
(43) Date of publication of application: 26.05.1999
(73) Proprietor: STMicroelectronics Limited, Almondsbury, Bristol, BS32 4SQ (GB)
(72) Inventor: HULME, Peter, John, Hertfordshire WD2 7JN (GB)
(74) Representative: Driver, Virginia Rozanne
(86) International application number: PCT/GB1998/000956
(87) International publication number: WO 1998/044647

(56) References cited:
- EP-A- 0 535 749
- DE-U- 9 415 811
- US-A- 5 081 534
- US-A- 5 109 222

## Description

### BACKGROUND OF THE INVENTION

### 1. Field of the Invention

The present invention relates to a method for remotely controlling apparatus.
More particularly, the present invention relates to a method for remotely controlling a plurality of apparatus using a single remote control device.

### 2. Background Art

In relatively recent times, apparatus such as televisions sets (TV), video recorders (VCR), music centres (HiFi), "set top box" receivers (STB), etc. have been supplied with their own individual remote control devices. The manufacturers of such apparatus use different, and usually unique, sets of control signals or codes for controlling, via remote control devices, each of these apparatus. Therefore, someone who has, for example, a TV, VCR, HiFi and a STB would expect to have four remote control devices: i.e. one remote control device for each apparatus; especially if the apparatus originated from different manufacturers.

Apart from the practical problems of managing, and often juggling, a plurality of remote control devices, an economic problem arises in that each remote control device comes with its own component and assembly cost. This cost is hidden within the cost of the apparatus, and is carried by the consumer. Additionally, each remote control has to be powered: again at a cost to the consumer. Typically this involves mean having between four and eight batteries for four remote control devices. The ultimate disposal of this number of batteries, multiplied by a nation of consumers having a plurality of remote control devices, impacts upon the environment as time progresses.

There are some suppliers that offer, for example, a TV and VCR as a set, which has a single, combined, remote control device that can be used to operate both the TV and the VCR. However, relatively speaking it is not often that such TV/VCR sets are bought, as they tend to be aimed at the high end of the consumer/business market. Therefore, the majority of TV/VCR combinations tend to be incompatible in terms of being controlled via a single remote control device. Therefore, the impact of such TV/VCR sets does very little to alleviate the practical, economic and environmental problems mentioned above. Attempts have been made in recent times to provide consumers with what are generally known as 'universal' remote control devices. The purpose of such a universal remote control device is to alleviate the aforementioned problems. However, there are also problems associated with these universal remote control devices. These problems can be summarised as follows:

For the universal remote control device to be truly universal, it must contain the control codes or signals that correspond to all apparatus available on the market. Apart from the practical and economic problems of a manufacturer of such universal remote control devices having to keep abreast of all emerging new codes, the universal remote control device would require a significant amount of memory to store all the various codes. Such memory is relatively expensive especially if this memory comes as a "stand-a-lone" memory. Furthermore, once a universal remote control device is sold it would have to be updated if it is to be at all effective for the future. Such an updateable universal remote control device would require relatively more expensive, programmable memory in addition to circuitry for receiving and processing new data relating to the new codes, and controlling a memory write operation.

It should be noted that the majority of present day remote control devices are optically based and operate in the infra-red band of the light spectrum. However, for the purposes of this document all previous and future reference to a remote control device is intended to include all types of current, and indeed future, remote control device such as acoustic and radio frequency (RF) remote control devices.

US 5,081,534 discloses a method of controlling first and second remote controlled apparatus according to the pre-characterising portion of claim 1.

DE-U-9415811 discloses another remote control system.

US 5,109,222 discloses a remote control system capable of controlling electrically operable equipment in a person occupiable structure.

### OBJECTS & SUMMARY OF THE INVENTION

Accordingly, an aim of the present invention is to overcome the aforementioned problems and attributable drawbacks associated with the current state of the art.

According to a first aspect of the present invention there is provided a method of controlling first and second remote controlled apparatus, the first apparatus being operatively responsive to first control signals associated with a first remote control device, and the second apparatus being operatively responsive to second control signals associated with a second remote control device, the method comprising: receiving, at said first apparatus, said control signals; storing said second control signals in said first apparatus; cross-referencing said second control signals with corresponding selected first control signals receiving first control signals from the first remote control device at said first apparatus; accessing said stored second control signals corresponding to selected ones of said first control signals; transmitting accessed second control signals to said second apparatus, wherein the first apparatus remotely controls the second apparatus responsive to selected ones of the first control signals from the first remote control device; characterised in that: said second control signals are received as part of a predetermined sequence from a broadcast medium.

According to a second aspect of the present invention there is provided a remotely controlled apparatus, operatively responsive to first control signals, comprising: first receiving means for receiving said first control signals from a first remote control device and second receiving means for receiving second control signals associated with a second remotely controlled apparatus operatively responsive to said second control signals; storage means for storing the second control signals, said second control signals being cross-referenced with corresponding selected ones of said first control signals; control means for accessing said stored second control signals corresponding to selected ones of said first control signals; transmitting means for transmitting said accessed second control signals to said second remotely controlled apparatus, whereby the remotely controlled apparatus remotely controls the second remotely controlled apparatus; characterised in that: said second receiving means is arranged to receive the second control signals as part of a predetermined sequence from a broadcast medium.

According to a third aspect of the present invention there is provided a remote control system comprising: a first remotely controlled apparatus operationally responsive to first control signals associated with a first remote control device; a second remotely controlled apparatus operatively responsive to second control signals associated with a second remote control device, wherein said first remotely controlled apparatus comprises receiving means for receiving second control signals (CS2), storage means for storing the second control signals, said second control signals being cross-referenced with corresponding selected ones of said first control signals, control means for accessing said stored second control signals corresponding to selected ones of said first control signals and transmitting means for transmitting said accessed second control signals to remotely control the second remotely controlled apparatus); characterised in that: said receiving means is arranged to receive the second control signals as part of a predetermined sequence from a broadcast medium.

Said first apparatus may be a satellite and/or cable set top box, STB, receiver or a video recorder, VCR, or television, TV, and said one or more second apparatus may respectively include a video recorder and a television or a set top box receiver and a television or a set top box receiver and a video recorder.

Said storage means may be a memory such as a ROM, EPROM, EEPROM, or flash memory. Said one or more second apparatus may include a sound system HiFi, for example a combined radio, cassette player and CD player.

Said one or more second apparatus may include home automation apparatus such as automatic blinds/shutters, light switching, security cameras etc.

Said second control signals may be received as part of a predetermined sequence from a portable storage medium. Said portable storage medium may be a smartcard or some other 'chip-carrying' medium.

The broadcast medium is, for example, a satellite dish receiver or a fibre optical cable and their respective associated hardware and system technologies.

Embodiments of the present invention provide a method for allowing a single apparatus, and its associated remote control device, to operatively control one or more other apparatus that are otherwise susceptible to being controlled by remote control signals.

Embodiments of the present invention thus provide a method for allowing a single apparatus, and its associated remote control device, to operatively control one or more other apparatus that are otherwise susceptible to being controlled by signals from their respective remote control devices.

Embodiments of the present invention provide a method for allowing a single apparatus, and its associated remote control device, to mimic or emulate the control signals of one or more other remote control devices so as to be able to operatively control the apparatus that would otherwise be controlled by the aforementioned other remote control devices.

Embodiments of the present invention provide a method for allowing practical, economical and environmental saving to be made by providing a method for allowing a single apparatus, and its associated remote control device, to operatively control one or more other apparatus that are otherwise susceptible to being controlled by signals from their respective remote control devices, i.e. providing a method for allowing a single apparatus, and its associated remote control device, to mimic or emulate the control signals of one or more other remote control devices so as to be able to operatively control the apparatus that would otherwise be controlled by the aforementioned other remote control devices.

Embodiments of the present invention provide a method for allowing a first apparatus to receive then store remote control signals corresponding to those of one or more remote control devices, which are respectively associated with one or more second apparatus, in order that a single remote control device and its associated first apparatus can operatively control one or more second apparatus.

Said control means may store said second control signals in said storage means.

The storage means may comprise a smart card.

Embodiments of the invention provide a remote control system in which there are a plurality of remotely controlled devices associated with a respective plurality of remote control devices, each remote control device generating respective control signals, wherein one remotely controlled device remotely controls the other of the plurality of devices responsive to the control signals from the remote control device associated with the one remotely controlled device.

### BRIEF DESCRIPTION OF THE DRAWINGS

These and other objects, as well as other advantages and features, of the present invention will become apparent in light of the following detailed description and accompanying drawings in which:
Figure 1 illustrates an embodiment of a typical system concept according to the present invention; and
Figure 2 illustrates an embodiment of a typical block diagram of circuitry within an apparatus according to the present invention.

### DETAILED DESCRIPTION OF THE INVENTION

The following figures which illustrate the various embodiments of the present invention may incorporate the same or similar elements. Therefore, where the same or similar elements occur throughout the various figures, they will be designated in the same manner.

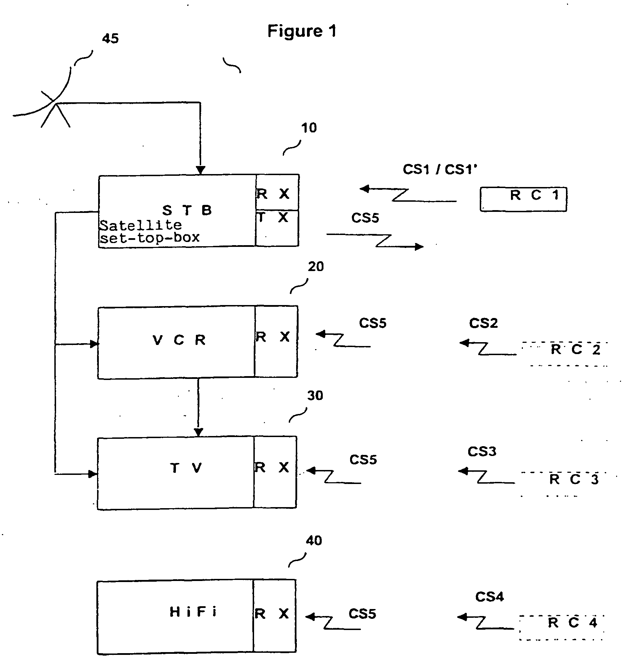

Figure 1 illustrates an embodiment of a typical system concept according to the present invention.

This system embodiment is illustrated as comprising a number of different apparatus, which include: a set-top-box receiver (STB) 10 for example a satellite set-top-box receiver, a video recorder (VCR) 20, a television set (TV) 30, and a sound system (HiFi) 40.

The STB 10 receives, in the illustrated embodiment, signals via a satellite dish 45. Alternatively, the signals could be provided, via a cable, e.g. an optical cable, by a 'cable provider'. In the illustrated embodiment, the signals received by the satellite dish 45 are broadcast signals.

The STB 10 has a common operative connection(s), which could be a coaxial or scart cable for example, into the VCR 20 and the TV 30. The video is illustrated as having an operative cable connection(s) into the TV 30. The HiFi is illustrated as having no physical connection to either the STB 10, VCR 20 or TV 30. The arrangement of this illustrative embodiment of a system and its associated connections is known to those skilled in the art.

It should be noted that this embodiment could also include other apparatus, connected either physically or non-physically to the STB 10, such as home automation apparatus, for example automatic blinds, video security etc.

In this embodiment the STB 10 incorporates two blocks: a receiver block RX and a transmitter block TX. The overall system embodiment illustrates four remote control devices RC1-RC4. The latter three remote control devices RC2-RC3 are represented by dashed-line rectangles. The remote control devices RC2-RC4 are respectively associated with the VCR 20, TV 30, and HiFi 40. The remote control devices RC2,RC3,RC4 generate respective control signals CS2,CS3,CS4 to control the respective apparatus VCR 20, TV 30, HiFi 40. Each of the VCR 20, TV 30 and HiFi 40 include a receiver block RX for receiving the respective control signals. The receiver block RX of the STB 10 receives, as it would in the state of the art, control signals CS1 from the remote control device RC1.

According to one arrangement not according to the present invention, the STB 10 is capable of receiving (i.e. downloading), via the receiver block RX, and processing, respective control signals CS2-CS4 from the remote control devices RC2-RC4 that are respectively associated with the apparatus 20, 30 and 40.

According to an embodiment of the present invention, the STB 10 receives (i.e. download) the respective control signals CS2-CS4 associated with the remote control devices RC2-RC4 via a smart card, or another suitable medium, that is input to the STB 10 and/or via the satellite dish 45 or optical cable. Being able to download from a smartcard or from the broadcast signals, for example, has the advantage of not having to have the remote control devices RC2-RC4.

Also according to the present invention, the transmitter block TX of the STB 10 transmits control signals CS5 that are used to control the other apparatus 20, 30 and 40. Alternatively, the STB could control the other physically connected apparatus 20 and 30 via the cable.

It should be noted that in this particular arrangement, the STB 10 is illustrated as controlling the other apparatus 20, 30 and 40. However, the arrangement could be adapted such that any one of the other apparatus, such as the VCR 20 or the TV 30 for example, is used to control the other apparatus.

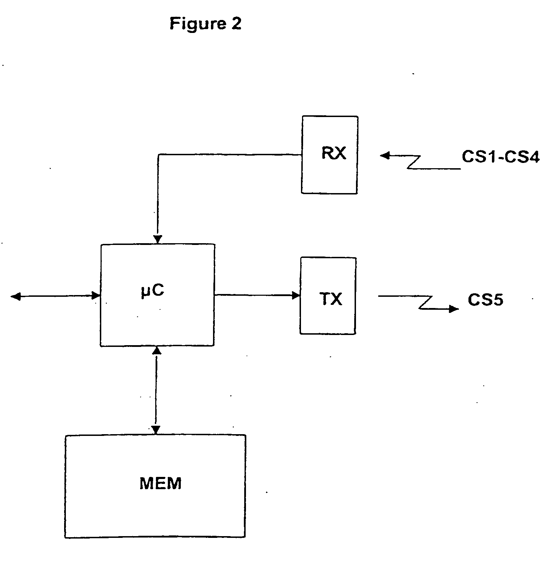

Figure 2 illustrates an embodiment of a typical block diagram of circuitry incorporated within the STB 10 apparatus according to the present invention. As mentioned hereinabove, this circuitry may alternatively be incorporated in other parts of the apparatus in the system.

This block diagram is illustrated as comprising: the receiver block RX; a microcontroller µC, a memory MEM; and the transmitter block TX.

According to one arrangement not according to the present invention the STB 10 is capable of receiving (i.e. downloading) via the receiver block RX, and processing, the respective control signals CS2-CS4 from the remote control devices RC2-RC4.

In this particular embodiment, the user initiates a software program within the STB 10 that allows the remote control devices RC2-RC4 to be interrogated. As a result of the interrogation, the remote control signals CS2-CS4 or codes associated with the other apparatus 20,30,40 are stored in a memory device preferably the memory MEM within the STB 10. The memory device may be, for example ROM, EPROM, EEPROM, flash memory etc. The remote control codes CS2-CS4 received from the remote control devices RC2-RC4 are operatively stored such that they correspond to known, or defined, respectively different remote control codes that are associated with the remote control device RC1. An important point to note is that the remote control signals CS1 of RC1 that correspond to the respective remote control signals CS2-CS4 from RC2-RC4 have to have the same associated functions: therefore when the "record" button on remote control device RC1 is pressed, the VCR 20 responds and records, and does not perform a different operation such as eject a tape.

The software program for carrying out the interrogation could be initiated either from the remote control device RC1 or by pressing a button(s) on the STB 10.

In this arrangement, the microcontroller µC of the STB 10 outwardly interfaces with the user, via the coax/scart connection(s), using the TV 30 for example.

The first issue to be addressed by the software program is to identify the type of apparatus the remote control codes CS2-CS4 associated with the remote control devices RC2-RC4 control. The software program for carrying out the interrogation may give the user a choice of options, via the TV 30 for example, from a predetermined list. Alternatively, the user could interface with the STB 10 so as to enter a non-specified apparatus, and even non-specified functions, using the keypad of the remote control device RC1, such interface techniques are known to those skilled in the art.

It should be noted that the remote control device RC1 requires a keypad arrangement and control sequence that allows it to work in various modes. For example, in a first, STB, mode M1, only those buttons, or button sequences, relating to the STB 10 functions would output corresponding remote control signals or codes for operating the STB 10. In a second, VCR, mode M2, only those buttons, or button sequences, relating to the VCR 20 functions would output corresponding remote control signals for operating the VCR 20, and so on. These various modes M1, M2, ... Mn etc, could be selected by pressing an appropriate button, or sequence of buttons, on RC1. In this example of distinct modes M1, M2, ... Mn etc, either the remote control device may add some distinguishing element to each transmitted remote control signal(s) or alternatively, RC1 may send a signal(s) to the STB 10 that sets up the STB 10 for the corresponding required mode.

Alternatively, there could be mixed-mode functioning. Mixed-mode functioning would be possible when in one mode, a function that was unique to another mode, i.e. another apparatus, was selected. For example, when in mode M1, a button on RC1 is pressed that corresponded to the VCR 'record' function. Since this 'record' function is unique to the VCR 20 then the need to enter into mode M2 is no longer necessary. In mixed-mode functioning, the need to enter into a particular mode would only be necessary when there is a button(s), or sequence of buttons, that are common to two or more apparatus, examples being numbers 0, 1, 2 ... n, volume +/-, channel +/- etc. It should also be noted that the remote control signals relating to the STB 10 apparatus will already be stored as reference remote control signals in the memory MEM associated with the microcontroller µC.

If, in this particular arrangement, the user selected an apparatus, for example a VCR 20, from a predetermined list of apparatus held within the memory MEM of the STB 10, then the STB 10 enters a software routine under the control of the "interrogation" software program. This routine requests, from another predetermined list, the user to press a sequence of buttons on remote control device RC2 etc. that corresponds to each of the various requests, i.e. the various functions associated with the VCR 20 etc. and each of the various requests would have a corresponding reference remote control signal that is associated with RC1. There could also be the option of the user defining functions that the STB 10 does not recognise and the user and/or microcontroller µC assigning a corresponding RC1 reference remote control signal.

In an example of setting up a VCR 20, the remote control signals CS2 transmitted by the VCR 20 remote control device RC2 are received by the receiver block RX of the STB, passed onto the microcontroller µC and then operatively stored in a memory location of the memory MEM as VCR reference remote control signals or codes along with associated remote control device RC1 reference remote control signals. For example, assume that the remote control signal from RC2 relating to the VCR's 'record' function was the four bit binary number 0110 and the corresponding remote control signal from RC1 relating to a VCR's 'record' function was the four bit binary number 1001: it should be noted that the codes from RC1 would have to be different from any of the codes associated with the other apparatus in order to avoid 'operational interference'. The binary number 1001 would already be stored in the memory MEM of the STB assuming it is predefined. Then, under control of the "interrogation" software program, it would be associated with the memory location of the binary number 0110 of the corresponding function, which would be stored in a different memory location. Therefore, the binary number 1001 would have a 'memory map' reference to the binary number 0110.

Having set up the memory MEM with the various reference remote control signals associated with the other apparatus and cross referencing them to corresponding remote control device RC1 reference control signals, during normal operation every time a remote control signal is received from remote control device RC1 by the microcontroller µC, via the receiver block RX of the STB the microcontroller µC compares this received remote control signal CS1 with the remote control device RC1 reference remote control signals stored in the memory MEM.

The remote control device RC1 may pause after each control signal CS1 associated with either the VCR, TV or HiFi to enable the transmitter block TX in the STB to send the appropriate control signals CS2, CS3 or CS4.

When the microcontroller µC identifies a remote control signal from remote control device RC1 that corresponds to a RC1 reference remote control signal it must firstly determine if the received signals or codes are associated with the STB 10 or with other apparatus. If the remote control signals received from remote control device RC1 are associated with the STB 10 then the microcontroller of the STB 10 is operated in accordance with the received signals or codes. If the RC1 received remote control signals are not associated with the STB 10 then the microcontroller of the STB 10 has to retrieve, from memory MEM, the stored remote control signals or codes to which the RC1 received signals or codes correspond. The microcontroller µC then outputs, via the transmitter block TX of the STB, the non-RC1 reference remote control signals or codes that correspond to the received and stored RC1 remote control signals or codes, which operatively controls the corresponding apparatus.

The receiver blocks RX may typically be a light sensitive semiconductor device that is capable of receiving signals, CS1-CS4 and CS5, in the infra-red part of the light spectrum since most remotely controlled apparatus use infra-red receivers and transmitters. Alternatively, a receiver that was capable of receiving electrical or electro-magnetic signals or codes could be employed. Another example of a receiver block RX is a modem that is capable of receiving signals superimposed on the mains electricity supply of a household.

Likewise, the transmitter block TX of the STB would typically be a light emitting semiconductor device that is capable of transmitting signals, CS5, in the infra-red part of the light spectrum. Alternatively, a transmitter that is capable of transmitting electrical or electro-magnetic signals or codes could be employed. Another example of a transmitter block TX is a modem that is capable of transmitting signals superimposed upon the mains electricity supply of a household.

It should be noted that there could also be a plurality of different types of receivers and transmitters within an apparatus.

In a preferred embodiment of the current invention, the remote control signals corresponding to a particular apparatus could be input, or downloaded, via a smart card or via the broadcast medium, neither of which are illustrated.

The advantages of such an embodiment means that there is no longer a requirement for more than one remote control device. Therefore, all the disadvantages, such as cost and battery disposal, that is associated with a plurality of remote control devices would be alleviated. However, the former embodiment would serve well in the transitional period to this preferred embodiment.

In the case of the smartcard, the manufacturers of an apparatus would supply, with the apparatus, a smartcard that contained all of the remote control codes that are associated with the particular apparatus, or even a manufacturers range of apparatus. The advantages of smartcards are known and include portability, programming flexibility, recyclability and low cost.

The 'master' apparatus in the example given above was the STB 10, but alternatively could be any of the other apparatus 20, 30 or 40. The 'master' apparatus may incorporate a smartcard reader and software that is operatively capable of extracting from the smartcard the remote control signals or codes associated with the 'slave' apparatus, for example a VCR 20, and storing and cross referencing such.

In the case of the broadcast medium, the remote control signals associated with various apparatus could be transmitted in the same or a similar manner as teletext, or even on a dedicated channel. The user could then, for example, select from a predefined list the type of 'slave' apparatus that is required to be controlled and then the 'master' device could automatically and operatively download, store and cross reference the remote control signals or codes associated with the particular 'slave' apparatus.

It should be noted that the arrangement, control and design of the various apparatus and the remote control device, and their interaction, embraces many fields, principles and techniques that are far too numerous and diverse to cover in any great detail in this document. Generally, for example, a system or protocol has to be set up such that the remote control signals are all read or downloaded, stored and cross referenced in a predetermined manner such that they have a corresponding, known, reference as to what their associated function and apparatus is; a protocol for selecting the 'master' and 'slave' devices would need to be established, since the inventor envisages that there will be at least some key apparatus, such as STB 10, VCR 20 and TV 30 that will all have the possibility of being 'master' apparatus. The design, layout and control of the remote control device has to take in a number of factors such as ease of use, the ability to control a plurality of apparatus, and the possibility of defining whether 'custom' apparatus and functions can be added etc.

Such fields, principles and techniques and requirements to exploit the present invention will be apparent to those skilled in the art in light of this disclosure embodying the present invention.

Although this invention has been described in connection with certain preferred embodiments, and generalised, it should be understood that the present disclosure is to be considered as an exemplification of the principles of the invention and that there is no intention of limiting the invention to the disclosed embodiments. On the contrary, it is intended that all alternatives, modifications and equivalent arrangements as may be included within the scope of the appended claims be covered as part of this invention.

## Claims

1. A method of controlling first (10) and second (20) remote controlled apparatus, the first apparatus (10) being operatively responsive to first control signals (CS1) associated with a first remote control device (RC1), and the second apparatus (20) being operatively responsive to second control signals (CS2) associated with a second remote control device (RC2), the method comprising:
- receiving, at said first apparatus (10), said control signals;
- storing said second control signals (CS2) in said first apparatus (10);
- cross-referencing said second control signals (CS2) with corresponding selected first control signals (CS1)
- receiving first control signals (CS1) from the first remote control device (RC1) at said first apparatus (10);
- accessing said stored second control signals (CS2) corresponding to selected ones of said first control signals (CS1);
- transmitting accessed second control signals (CS2) to said second apparatus (20), wherein the first apparatus (10) remotely controls the second apparatus (20) responsive to selected ones of the first control signals (CS1) from the first remote control device (RC1);
**characterised in that**:
said second control signals (CS2) are received as part of a predetermined sequence from a broadcast medium (45).

2. The method of claim 1, wherein said first apparatus (10) remotely controls said one (20) or more (30,40) second apparatus.

3. A method according to claim 1 or claim 2, **characterised in that** said first apparatus (10) is a set top box receiver.

4. A method according to any one of claims 1 to 3, **characterised in that** said one (20) or more (30,40) second apparatus include a video recorder and a television.

5. A method according to any of claims 1 to 4, **characterised in that** said one (20) or more (30,40) second apparatus include a sound system.

6. A method according to any of claims 1 to 5, **characterised in that** said one (20) or more (30,40) second apparatus include home automation apparatus.

7. A method according to any of claims 1 to 6 **characterised in that** said second control signals (CS2) are received as part of a predetermined sequence from a portable storage medium.

8. A method according to claim 7 **characterised in that** said portable storage medium is a smartcard.

9. A remotely controlled apparatus (10), operatively responsive to first control signals (CS1), comprising:
- first receiving means (RX) for receiving said first control signals from a first remote control device (RC1) and second receiving means (RX) for receiving second control signals (CS2) associated with a second remotely controlled apparatus (20) operatively responsive to said second control signals (CS2);
- storage means (MEM) for storing the second control signals (CS2), said second control signals (CS2) being cross-referenced with corresponding selected ones of said first control signals (RC1) ;
- control means (µC) for accessing said stored second control signals (CS2) corresponding to selected ones of said first control signals (CS1) ;
- transmitting means (TX) for transmitting said accessed second control signals (CS2) to said second remotely controlled apparatus (20), whereby the remotely controlled apparatus (10) remotely controls the second remotely controlled apparatus (20);
**characterised in that**:
said second receiving means (RX) is arranged to receive the second control signals (CS2) as part of a predetermined sequence from a broadcast medium (45).

10. The remotely controlled apparatus of claim 9, wherein said control means (µC) stores said second control signals (CS2) in said storage means (MEM).

11. A remote control system comprising:
- a first remotely controlled apparatus (10) operationally responsive to first control signals (CS1) associated with a first remote control device (RC1);
- a second remotely controlled apparatus (20) operatively responsive to second control signals (CS2) associated with a second remote control device (RC2),
wherein said first remotely controlled apparatus (10) comprises receiving means (RX) for receiving second control signals (CS2), storage means (MEM) for storing the second control signals (CS2), said second control signals (CS2) being cross-referenced with corresponding selected ones of said first control signals (CS1), control means (µC) for accessing said stored second control signals (CS2) corresponding to selected ones of said first control signals (CS1) and transmitting means (TX) for transmitting said accessed second control signals (CS2) to remotely control the second remotely controlled apparatus (20);
**characterised in that**:
said receiving means (RX) is arranged to receive the second control signals (CS2) as part of a predetermined sequence from a broadcast medium (45).

12. The remote control system of claim 11 in which the first remotely controlled apparatus comprises the remotely controlled apparatus of claim 9 or 10.

## Patentansprüche

1. Verfahren zum Steuern einer ersten (10) und einer zweiten (20) ferngesteuerten Vorrichtung, wobei die erste Vorrichtung (10) auf erste Steuersignale (CS1), die einem ersten Fernsteuergerät (RC1) zugeordnet sind, reagiert, und die zweite Vorrichtung (20) auf zweite Steuersignale (CS2), die einem zweiten Fernsteuergerät (RC2) zugeordnet sind, reagiert, wobei das Verfahren umfasst:
- Empfangen der Steuersignale an der ersten Vorrichtung (10);
- Speichern der zweiten Steuersignale (CS2) in der ersten Vorrichtung (10);
- Kreuzverweisen der zweiten Steuersignale (CS2) mit den entsprechend gewählten ersten Steuersignalen (CS1);
- Empfangen der ersten Steuersignale (CS1) von dem ersten Fernsteuergerät (RC1) an der ersten Vorrichtung (10);
- Abrufen der gespeicherten zweiten Steuersignale (CS2), die den gewählten ersten Steuersignalen (CS1) entsprechen;
- Übertragen der abgerufenen zweiten Steuersignale (CS2) an die zweite Vorrichtung (20), wobei die erste Vorrichtung (10), reagierend auf die gewählten ersten Steuersignale (CS1) von dem ersten Fernsteuergerät (RC1), die zweite Vorrichtung (20) fernsteuert;
**dadurch gekennzeichnet, dass**:
die zweiten Steuersignale (CS2) als Teil einer vorgegebenen Sequenz von einem Aussendungsmedium (45) empfangen werden.

2. Verfahren nach Anspruch 1, bei welchem die erste Vorrichtung (10) eine (20) oder mehrere (30, 40) zweite Vorrichtungen fernsteuert.

3. Verfahren nach Anspruch 1 oder 2, **dadurch gekennzeichnet, dass** die erste Vorrichtung (10) ein Set-Top Box Empfänger ist.

4. Verfahren nach einem der Ansprüche 1 bis 3, **dadurch gekennzeichnet, dass** die eine (20) oder mehrere (30,40) zweite Vorrichtungen einen Videorecorder und einen Fernseher umfassen.

5. Verfahren nach einem der Ansprüche 1 bis 4, **dadurch gekennzeichnet, dass** die eine (20) oder mehrere (30,40) zweite Vorrichtungen eine Tonanlage umfassen.

6. Verfahren nach einem der Ansprüche 1 bis 5, **dadurch gekennzeichnet, dass** die eine (20) oder mehrere (30,40) zweite Vorrichtungen eine Haustechnikvorrichtung umfassen.

7. Verfahren nach einem der Ansprüche 1 bis 6, **dadurch gekennzeichnet, dass** die zweiten Steuersignale (CS2) als Teil einer vorgegebenen Sequenz von einem tragbaren Speichermedium empfangen werden.

8. Verfahren nach Anspruch 7 **dadurch gekennzeichnet, dass** das tragbare Speichermedium eine Smartcard ist.

9. Ferngesteuerte Vorrichtung (10), die auf erste Steuersignale (CS1) reagiert, umfasst:
- ein erstes Empfangsmittel (RX) zum Empfangen der ersten Steuersignale von dem ersten Fernsteuergerät (RC1) und ein zweites Empfangsmittel (RX) zum Empfangen zweiter Steuersignale (CS2), die einer zweiten ferngesteuerten Vorrichtung (20), die auf die zweiten Steuersignale (CS2) reagiert, zugeordnet sind;
- ein Speichermittel (MEM) zum Speichern der zweiten Steuersignale (CS2), wobei die zweiten Steuersignale (CS2) mit entsprechend gewählten ersten Steuersignalen (CS1) kreuzverwiesen sind;
- ein Steuermittel (µC) zum Abrufen der gespeicherten zweiten Steuersignale (CS2), die den gewählten ersten Steuersignalen (CS1) entsprechen;
- ein Übertragungsmittel (TX) zum Übertragen der abgerufenen zweiten Steuersignale (CS2) an die zweite ferngesteuerte Vorrichtung (20), wobei die ferngesteuerte Vorrichtung (10) die zweite ferngesteuerte Vorrichtung (20) fernsteuert;
**dadurch gekennzeichnet, dass**
das zweite Empfangsmittel (RX) zum Empfangen der zweiten Steuersignale als Teil einer vorgegebenen Sequenz von einem Aussendungsmedium (45) ausgebildet ist.

10. Ferngesteuerte Vorrichtung nach Anspruch 9, bei welcher das Steuermittel (µC) die zweiten Steuersignale (CS2) in dem Speichermittel (MEM) speichert.

11. Fernsteuersystem umfassend:
- eine erste ferngesteuerte Vorrichtung (10), die auf erste einem ersten Fernsteuergerät (RC1) zugeordnete Steuersignale (CS1) reagiert;
- eine zweite ferngesteuert Vorrichtung (20), die auf zweite einem zweiten Fernsteuergerät (RC2) zugeordnete Steuersignale (CS2) reagiert,
wobei die erste ferngesteuerte Vorrichtung (10) umfasst: ein Empfangsmittel (RX) zum Empfangen von zweiten Steuersignalen (CS2), ein Speichermittel (MEM) zum Speichern der zweiten Steuersignale (CS2), wobei die zweiten Steuersignale (CS2) mit entsprechend gewählten ersten Steuersignalen (CS1) kreuzverwiesen sind, ein Steuermittel (µC) zum Abrufen der gespeicherten zweiten Steuersignale (CS2), die den gewählten ersten Steuersignalen (CS1) entsprechen, und ein Übertragungsmittel (TX) zum Übertragen der abgerufenen zweiten Steuersignale (CS2), um die zweite ferngesteuerte Vorrichtung (20) fernzusteuern;
**dadurch gekennzeichnet, dass**
das Empfangsmittel (RX) ausgebildet ist, um die zweiten Steuersignale (CS2) als Teil einer vorgegebenen Sequenz von einem Aussendungsmedium (45) zu empfangen.

12. Fernsteuersystem nach Anspruch 11, bei welchem die erste ferngesteuerte Vorrichtung die ferngesteuerte Vorrichtung nach Anspruch 9 oder 10 umfasst.

## Revendications

1. Procédé de commande de premier (10) et second (20) appareils de télécommande, le premier appareil (10) agissant en réponse à des premiers signaux de commande (CS1) associés à un premier dispositif de télécommande (RC1) et le second appareil (20) agissant en réponse à des seconds signaux de commande (CS2) associés à un second dispositif de télécommande (RC2), le procédé comprenant les étapes suivantes :
- recevoir, au niveau du premier appareil (10), les signaux de commande ;
- mémoriser les seconds signaux de commande (CS2) dans le premier appareil (10) ;
- établir des correspondances croisées entre les seconds signaux de commande (CS2) et des premiers signaux de commande (CS1) sélectionnés correspondants ;
- recevoir les premiers signaux de commande (CS1) à partir du premier dispositif de télécommande (RC1) au niveau du premier appareil (10) ;
- accéder aux seconds signaux de commande mémorisés (CS2) correspondant à certains sélectionnés des premiers signaux de commande (CS1) ;
- émettre des seconds signaux de commande (CS2) auxquels on a accédé vers le second appareil (20), le premier appareil (10) télécommandant le second appareil (20) en réponse à certains sélectionnés des premiers signaux de commande (CS1) en provenance du premier dispositif de télécommande (RC1) ;
**caractérisé en ce que** les seconds signaux de commande (SC2) sont reçus en tant que partie d'une séquence prédéterminée à partir d'un moyen d'émission (45).

2. Procédé selon la revendication 1, dans lequel le premier appareil (10) télécommande lesdits un (20) ou plusieurs (30, 40) seconds appareils.

3. Procédé selon la revendication 1 ou 2, dans lequel le premier appareil (10) est un récepteur intérieur.

4. Procédé selon l'une quelconque des revendications 1 à 3, **caractérisé en ce que** ledit un (20) ou plusieurs (30, 40) seconds appareils incluent un enregistreur vidéo et une télévision.

5. Procédé selon l'une quelconque des revendications 1 à 4, **caractérisé en ce que** ledit un (20) ou plusieurs (30, 40) seconds appareils comprennent un système sonore.

6. Procédé selon l'une quelconque des revendications 1 à 5, **caractérisé en ce que** ledit un (20) ou plusieurs (30, 40) seconds appareils comprennent des appareils d'automatisation domestiques.

7. Procédé selon l'une quelconque des revendications 1 à 6, **caractérisé en ce que** les seconds signaux de commande (CS2) sont reçus en tant que séquence prédéterminée d'un moyen d'enregistrement portable.

8. Procédé selon la revendication 7, **caractérisé en ce que** le milieu d'enregistrement portable est une carte à puce.

9. Dispositif télécommandé (10) agissant en réponse à des premiers signaux de commande (CS1) comprenant :
- des premiers moyens de réception (RX) pour recevoir les premiers signaux de commande à partir d'un premier dispositif de télécommande (RC1) et des seconds moyens de réception (RX) pour recevoir des seconds signaux de commande (CS2) associés à un second appareil télécommandé (20), agissant en réponse aux seconds signaux de commande (CS2) ;
- des moyens de mémorisation (MEM) pour mémoriser les seconds signaux de commande (CS2), les seconds signaux de commande (CS2) étant référencés à certains choisis correspondant des premiers signaux de commande (RC1) ;
- des moyens de commande (µC) pour accéder aux seconds signaux de commande mémorisés (CS2) correspondant à certains sélectionnés des premiers signaux de commande (CS1) ;
- des moyens d'émission (TX) pour émettre les seconds signaux de commande (CS2) auxquels on a accédé vers le second appareil télécommandé (20), d'où il résulte que l'appareil télécommandé (10) télécommande le second appareil télécommandé (20) ;
**caractérisé en ce que** les seconds moyens de réception (RX) sont agencés pour recevoir les seconds signaux de commande (CS2) en tant que partie d'une séquence prédéterminée en provenance d'un moyen d'émission (45).

10. Appareil télécommandé selon la revendication 9, dans lequel le moyen de commande (µC) mémorise les seconds signaux de commande (CS2) dans les moyens de mémoire (MEM).

11. Système de télécommande comprenant :
- un premier appareil télécommandé (10) agissant en réponse à des premiers signaux de commande (CS1) associés à un premier dispositif de télécommande (RC1) ;
- un second appareil télécommandé (20) agissant en réponse à des seconds signaux de commande (CS2) associés à un second dispositif de télécommande (RC2),
dans lequel le premier appareil télécommandé (10) comprend des moyens de réception (RX) pour recevoir les seconds signaux de commande (CS2), des moyens de mémorisation (MEM) pour mémoriser les seconds signaux de commande (CS2), les seconds signaux de commande (CS2) étant référencés à certains sélectionnés correspondant des premiers signaux de commande (CS1), des moyens de commande (µC) pour accéder aux seconds signaux de commande mémorisés (CS2) correspondant à certains sélectionnés des premiers signaux de commande (CS1), et des moyens d'émission (TX) pour émettre les seconds signaux de commande auxquels on a accédé (CS2) pour télécommander le second appareil télécommandé (20) ;
**caractérisé en ce que** les moyens de réception (RX) sont disposés pour recevoir les seconds signaux de commande (CS2) en tant que partie d'une séquence prédéterminée en provenance d'un moyen de diffusion (45).

12. Système de télécommande selon la revendication 11, dans lequel le premier appareil télécommandé comprend l'appareil télécommandé selon la revendication 9 ou 10.
